# EUROPÄISCHE PATENTSCHRIFT

(11) **EP 2 079 885 B1**
(45) Veröffentlichungstag und Bekanntmachung des Hinweises auf die Patenterteilung: **17.07.2013**
(21) Anmeldenummer: 07818365.4
(22) Anmeldetag: 24.09.2007
(51) Int. Cl.: E04B 1/19, E04G 7/30, F16B 7/18

(54) **Leitfähige Verbindungsvorrichtung mit Kontaktkorrosionsschutz**
Conductive connection device comprising a contact corrosion protection means
Dispositif de raccordement conducteur présentant de propriétés de résistance à la corrosion

(30) Priorität: 09.10.2006 DE 202006015426 U
(43) Veröffentlichungstag der Anmeldung: 22.07.2009
(73) Patentinhaber: G. Tröster e.K., 96149 Breitengüssbach (DE)
(72) Erfinder: TRÖSTER, Günther, 96149 Breitengüssbach (DE)
(74) Vertreter: Schlögl, Markus
(86) Internationale Anmeldenummer: PCT/EP2007/008277
(87) Internationale Veröffentlichungsnummer: WO 2008/043431

(56) Entgegenhaltungen:
- EP-A- 0 511 063
- GB-A- 2 065 155
- GB-A- 2 197 417
- US-A- 4 872 779

## Beschreibung

Die Erfindung betrifft eine Vorrichtung umfassend ein Stabelement, ein Knotenelement und eine Verbindungsvorrichtung zwischen dem Stabelement und dem Knotenelement. Stabelement und Knotenelement sind hierbei vorzugsweise Bestandteil einer Tragkonstruktion, beispielsweise eines Fachwerks, insbesondere eines Raumfachwerks. Derartige Vorrichtungen sind beispielsweise aus GB 2 197 417 A bekannt.

Fachwerke, insbesondere Raumfachwerke, beispielsweise Gerüst-, Glasbau-, Dach- und Fassadenkonstruktionen, sind aufgebaut aus einem modularen System aus Stabelementen (oder: Stäbe, runde oder eckige Hohlprofile, Rohrelemente, Rund-Rohrstäbe) und Knotenelementen (oder: Knoten). Bei der Erstellung der Fachwerke werden die Stabelemente über die eingangs genannten Verbindungsvorrichtungen mit den Knotenelementen verbunden. Hierzu umfasst die Verbindungsvorrichtung einen entlang der Längsachse des Stabelements ausgerichteten, in ein am Ende des Stabelements vorgesehenes Anschlagstück drehbar eingesteckten Gewindebolzen (oder: Bolzen, Exzenter, Schraube, Gewindeschraube), der mit seinem Gewinde in eine Gewindebohrung im Knotenelement eindrehbar ist.

Die Knotenelemente wiederum sind dreidimensionale Objekte, die in der Regel zumindest im Wesentlichen kugelförmig ausgebildet sind. Es sind aber auch würfelförmige, quaderförmige und teller- bzw. napfförmige Knotenelemente bekannt. Die Knotenelemente weisen üblicherweise mehrere Gewindebohrungen auf. Zumindest bei einer im Wesentlichen kugelförmigen Ausbildung, aber auch bei würfel- oder quaderförmigen Knotenelementen sind diese Gewindebohrungen derart orientiert, dass sie bzw. ihre Verlängerungen sich im Mittelpunkt des Knotenelements schneiden. Auf diese Weise lassen sich mehrere Stabelemente über ein Knotenelement miteinander verbinden. Mittels dieses modularen Systems umfassend Stabelemente und Knotenelement lassen sich somit beliebige lineare, flächige oder räumliche Tragkonstruktionen, beispielsweise Fachwerke erstellen.

Bekannt ist ein derartiges modulares System zur Erstellung von Fachwerken beispielsweise seitens der Firma MERO-TSK International GmbH & Co. KG mit Sitz in Würzburg. Das Knotenelement wird auch als sogenannter Mero-Knoten bezeichnet.

Knotenelemente und Stabelemente bestehen üblicherweise aus Aluminium, die Gewindebolzen aus Stahl, insbesondere Edelstahl oder feuerverzinktem Stahl oder galvanisch verzinktem Stahl oder rostfreiem Stahl. Alternativ können auch die Knotenelemente und/oder die Stabelemente aus Stahl, insbesondere Edelstahl oder feuerverzinktem Stahl oder rostfreiem Stahl, bestehen. Die Stabelemente können ferner aus Faserverbundwerkstoff, beispielsweise aus kohlenstofffaserverstärkten Kunststoffen (auch: CFK) und/oder aus glasfaserverstärkten Kunststoffen (auch: GFK), bestehen bzw. diese umfassen.

Als problematisch erweist sich insbesondere der Kontakt zwischen Komponenten aus Stahl und Komponenten aus Aluminium. Gefördert durch die hierdurch gegebene elektrochemische Potentialdifferenz kommt es hier zu unerwünschter Kontaktkorrosion. Diese wird zusätzlich gefördert durch raue Umgebungsbedingungen, beispielsweise an meernahen Standorten (Küstenatmosphäre, hohe Salzbelastung der Luft). Dort ist die Umgebungsluft verstärkt mit die Kontaktkorrosion fördernden Chloriden belastet. Auch eine Industrieatmosphäre fördert die Kontaktkorrosion, insbesondere eine hohe Schwefeldioxidbelastung der Luft.

Grundsätzlich könnte die Kontaktkorrosion auf einfache Weise durch Einbringung einer Isolation zwischen den Metallkontakten unterbunden werden, beispielsweise durch Aufbringung isolierender Beschichtungen (z.B. Lacke). Dies führt jedoch dazu, dass die einzelnen Komponenten eines Fachwerks nicht mehr elektrisch miteinander in Verbindung stehen und sich somit gegeneinander elektrisch aufladen können.

Dies ist unter bestimmten Umgebungsbedingungen unerwünscht. Beispielsweise würde in einer mit Kohlestaub belasteten Umgebungsluft, wie sie in der Umgebung von Kohlekraftwerken auftritt, eine erhöhte Explosionsgefahr entstehen. In diesem Fall würde das Fachwerk nicht mehr den einzuhaltenden Sicherheitsanforderungen entsprechen. Eine Isolation der einzelnen Fachwerkkomponenten gegeneinander kommt hier somit nicht in Betracht.

Der vorliegenden Erfindung liegt daher die Aufgabe zugrunde, eine Vorrichtung und ein Fachwerk anzugeben, durch die bzw. das die vorgenannten Nachteile des Standes der Technik zumindest teilweise überwunden werden. Insbesondere soll eine Vorrichtung angegeben werden, mittels der sich Knotenelemente und Stabelemente eines Fachwerks gegen Kontaktkorrosion geschützt und dauerhaft elektrisch leitfähig verbinden lassen.

Diese Aufgabe wird gemäß der Erfindung durch eine Vorrichtung mit den Merkmalen nach Anspruch 1 sowie durch ein Fachwerk nach Anspruch 10 gelöst. Vorteilhafte Ausgestaltungen und Weiterbildungen sind in den abhängigen Ansprüchen angegeben.

Die Vorrichtung gemäß der Erfindung umfasst ein Stabelement, ein Knotenelement und eine Verbindungsvorrichtung zwischen dem Stabelement und dem Knotenelement. Das Stabelement und/oder das Knotenelement bestehen zumindest im Wesentlichen aus Aluminium. Das Knotenelement weist eine oder mehrere Gewindebohrungen auf. Die Verbindungsvorrichtung umfasst mindestens einen Gewindebolzen, dessen Bolzenkopf im Stabelement angeordnet ist und dessen Gewinde mit der Gewindebohrung im Knotenelement zusammenwirkt. Der Gewindebolzen besteht zumindest im Wesentlichen aus Stahl, vorzugsweise Edelstahl oder feuerverzinktem Stahl oder galvanisch verzinktem Stahl oder rostfreiem Stahl. Zur Unterbindung der Kontaktkorrosion ist der Gewindebolzen teilweise oder vollständig mit einer kontaktkorrosionsbeständigen und dauerhaft elektrisch leitfähigen Beschichtung (oder: Überzug, Decklack) versehen.

Zwischen Knotenelement und Gewindebolzen und/oder zwischen Gewindebolzen und Stabelement ergibt sich somit ein Aufeinandertreffen von Aluminium und Stahl. Dieses Aufeinandertreffen ist durch die Beschichtung auf dem Gewindebolzen vor Kontaktkorrosion geschützt. Gleichzeitig bleibt trotz der Beschichtung bzw. gerade über die Beschichtung die elektrische Verbindung zwischen den Komponenten erhalten.

Die Vorteile der Erfindung liegen insbesondere in der Vermeidung von Kontaktkorrosion zwischen Knotenelement und Gewindebolzen und/oder zwischen Gewindebolzen und Stabelement (oder gegebenenfalls jeweils zwischengeschobenen Komponenten, beispielsweise Beilagscheiben), bei gleichzeitiger Aufrechterhaltung der elektrischen Leitfähigkeit zwischen den Komponenten.

Die Erfindung ermöglicht somit die Herstellung durchgehend und dauerhaft - auch bei extremen äußeren Bedingungen, beispielsweise chloridhaltiger Luft - in sich elektrisch verbundener und damit geerdeter oder erdbarer Fachwerke. Damit kann den Sicherheitsanforderungen auch in explosionsgefährdeten Umgebungen, beispielsweise bei kohlenstaubangereicherter Umgebungsluft, entsprochen werden.

Eine Ausführungsvariante der Erfindung sieht vor, dass die Beschichtung ein Lack mit leitfähigem Zusatz, insbesondere mit einem kohlenstoffhaltigen Zusatz oder mit Kohlenstoff als Zusatz, ist.

Gemäß einer Weiterbildung ist vorgesehen, das die Beschichtung Zink und/oder Aluminium, insbesondere Zink- und/oder Aluminiumlamellen, vorzugsweise in einer Chromoxydmatrize, enthält. Bevorzugt handelt es sich bei der Beschichtung um eine DACROMET®-Beschichtung, insbesondere um die von dem Unternehmen DACRAL S.A., Creil, Frankreich, angebotene Beschichtung DACROMET 320® (Eingetragenes Warenzeichen der Metal Coatings International Inc.). DACROMET 320® ist ein nicht elektrolytischer, aluminiumgrauer, dünnschichtiger Überzug. Dieser ist insbesondere bestimmt für den Korrosionsschutz von Teilen aus Stahl, Gusseisen oder sonstigen eisenhaltigen Metallen. Er enthält Zink- und Aluminiumlamellen in einer Chromoxydmatrize. DACROMET 320® ist elektrisch leitfähig. Bei der Aufbringung des Überzugs entsteht keine Wasserstoffversprödung, der Überzug ist somit besonders gut für den Schutz der sicherheitsrelevanten Konstruktionsteile des Fachwerks geeignet. Die Auftragung erfolgt üblicherweise im Kalttauchverfahren in wässrigen Lösungen oder durch Spritzen. Insbesondere im Kalttauchverfahren lassen sich auch die gesamten Innenseiten der zu beschichtenden Komponenten sowie schwer zugängliche Löcher oder Kanten, wie sie beim Gewindebolzen auftreten, zuverlässig abdecken. Hierdurch entsteht ein durch die gesamte Schicht passivierter Überzug mit hohem Korrosionswiderstand. Der Korrosionswiderstand ist abhängig von der Schichtdicke und ergibt sich insbesondere aus dem Barriere-Effekt durch die Lamellenstruktur des Films (des Überzugs), aus dem kontrollierten, kathodischen Schutz des Zinks im Verhältnis zum eisenhaltigen Substrat und/oder der Verlangsamung des natürlichen Zink- und Aluminiumverbrauchs durch die Filmpassivierung. Die Verwendung von DACROMET 320® ist unter anderem deshalb bevorzugt, da sich dieses Produkt als besonders beständig gegen Kontaktkorrosion im Kontakt mit Aluminium erweist.

Gemäß einer bevorzugten Ausführungsvariante liegt die Schichtdicke der Beschichtung zwischen 1 µm und 20 µm, insbesondere zwischen 5 µm und 15 µm, vorzugsweise bei etwa 10 µm.

In einer speziellen Weiterbildung ist zwischen Bolzenkopf und Stabelement eine Beilagscheibe angeordnet ist, die zumindest im Wesentlichen aus Metall, vorzugsweise Aluminium oder Stahl, insbesondere Edelstahl oder feuerverzinktem Stahl oder galvanisch verzinktem Stahl oder rostfreiem Stahl, und/oder aus Faserverbundwerkstoff, insbesondere aus leitfähigem Faserverbundwerkstoff, vorzugsweise aus kohlenstofffaserverstärktem Kunststoff und/oder aus glasfaserverstärktem Kunststoff, besteht und die ebenfalls mit der vorgenannten oder mit einer anderen kontaktkorrosionsbeständigen und leitfähigen Beschichtung versehen ist. Dadurch ist insbesondere sichergestellt, dass auch bei Vorsehen dieser Beilagscheibe alle auftretenden Aluminium-Stahl-Kontakte durch die Beschichtung vor Kontaktkorrosion geschützt sind, wobei die elektrische Leitfähigkeit erhalten bleibt.

Des Weiteren kann vorgesehen sein, dass der Gewindebolzen zumindest teilweise von einer vorzugsweise im Wesentlichen aus Metall, insbesondere Aluminium, oder aus Kunststoff, insbesondere Faserverbundwerkstoff (beispielsweise kohlenstofffaserverstärktem oder glasfaserverstärktem Kunststoff), bestehenden Treibmuffe umgeben ist, die über einen Mitnehmerstift drehfest, vorzugsweise jedoch axial verschiebbar, mit dem Gewindebolzen verbunden ist. Gemäß einer Weiterbildung hierzu ist der vorzugsweise zumindest im Wesentlichen aus Metall, insbesondere Stahl, vorzugsweise Edelstahl oder feuerverzinktem Stahl oder galvanisch verzinktem Stahl oder rostfreiem Stahl, und/oder aus Faserverbundwerkstoff, insbesondere aus leitfähigem Faserverbundwerkstoff, vorzugsweise aus kohlenstofffaserverstärktem Kunststoff und/oder aus glasfaserverstärktem Kunststoff bestehende Mitnehmerstift ebenfalls mit der oder mit einer kontaktkorrosionsbeständigen und leitfähigen Beschichtung versehen. Somit ist auch hier sichergestellt, dass alle möglicherweise auftretenden Aluminium-Stahl-Kontakte durch die Beschichtung vor Kontaktkorrosion geschützt sind, wobei die elektrische Leitfähigkeit erhalten bleibt.

Zur Vermeidung eines elektrischen Kontakts insbesondere zwischen Gewindebolzen und Treibmuffe kann diese teilweise oder vollständig mit einer nicht leitfähigen Beschichtung versehen sein.

Auch kann die Treibmuffe gegenüber dem Knotenelement durch Anordnung einer Isolationsscheibe, insbesondere aus nicht leitfähigem Kunststoff und/oder Hartgewebe und/oder Glashartgewebe, isoliert sein. In Betracht kommt ferner auch eine Isolationsscheibe aus Textilien (oder: Stoff) und/oder Plexiglas.

Die Verwendung der Vorrichtung gemäß der Erfindung bei der Erstellung von Fachwerken, insbesondere Raumfachwerken, führt zu Fachwerken, die den eingangs genannten Sicherheitsanforderungen auch in rauen und explosionsgefährdeten Umgebungsbedingungen gerecht werden. Das Fachwerk gemäß der Erfindung umfasst dementsprechend Knotenelemente und Stabelemente, zwischen denen Verbindungsvorrichtungen vorgesehen sind bzw. die über Verbindungsvorrichtungen aneinander angebracht sind, und zwar derart, dass die Stabelemente, die Knotenelemente und die Verbindungsvorrichtungen die vorbeschriebenen erfindungsgemäßen Vorrichtungen ausbilden.

Die Stabelemente und/oder die Knotenelemente und/oder die Verbindungsvorrichtungen können im montierten Zustand ergänzend zu den vorgenannten Beschichtungen mit einer Korrosionsschutz-Lackierung (Oberflächenlackierung), insbesondere einer herkömmlichen Korrosionsschutz-Lackierung, versehen sein.

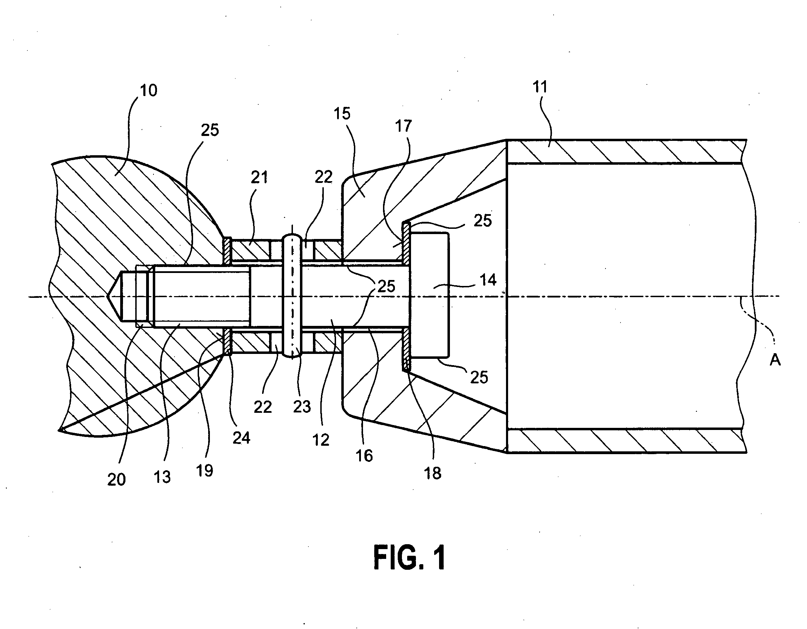

Die Erfindung wird nachstehend auch hinsichtlich weiterer Merkmale und Vorteile anhand der Beschreibung eines Ausführungsbeispiels und unter Bezugnahme auf die beiliegende Zeichnung näher erläutert. Dabei zeigt
- FIG 1: in einer schematischen Schnittdarstellung ein Ausführungsbeispiel einer Vorrichtung gemäß der Erfindung, integriert in ein nur teilweise dargestelltes Fachwerk.

Die einzige FIG 1 stellt schematisch in Schnittdarstellung einen Ausschnitt eines Fachwerks dar. Zu erkennen sind ein im Wesentlichen kugelförmiges Knotenelement 10 und ein Stabelement 11, hier ein Rundstabelement, mit einer Längsachse A. Der dargestellte Schnitt ist ein Längsschnitt durch den dargestellten Fachwerk-Ausschnitt entlang der Längsachse A.

In dem Knotenelement 10 sind mehrere Gewindebohrungen 20 ausgebildet, von denen in der Figur nur eine dargestellt ist. Die Gewindebohrungen 20 sind zur Mitte des Knotenelements 10 hin orientiert, im (dargestellten) montierten Zustand entspricht die Längsachse der Gewindebohrung 20 der Längsachse A des jeweiligen Stabelements 11. Die Gewindebohrungen 20 münden an der Oberfläche des Knotenelements 10 in einer Abflachung 19 des Knotenelements 10, das heißt die Gewindebohrung 20 ist an der Oberfläche des Knotenelements 10 von einer Abflachung 19 und damit von einer ebenen Fläche umgeben.

Das Stabelement 11 weist an seinem dem Knotenelement 10 zugewandten Ende ein Anschlagstück 15 auf, das mit dem Stabelement 11 verschweißt oder verklebt ist. Auch eine Verschraubung ist möglich. Durch eine Durchführung 16 im Anschlagstück 15 ist ein Gewindebolzen 12 mit einem Bolzenkopf 14 und, zu seinem dem Bolzenkopf 14 gegenüberliegenden Ende hin, einem Gewinde 13, gesteckt. Das Gewinde 13 (Außengewinde) korrespondiert mit der Gewindebohrung 20 (Innengewinde) im Knotenelement 10, das heißt der Gewindebolzen 12 ist in die Gewindebohrung eindrehbar.

Die Abmessungen der Durchführung 16 und des Gewindebolzens 12 sind derart aufeinander abgestimmt, dass zwar der Schaft des Gewindebolzens 12 (mit Spiel, siehe Figur) durch die Durchführung 16 steckbar ist, der Bolzenkopf 14 jedoch nicht durch die Durchführung 16 hindurchpasst und gegen eine am Anschlagstück 15 ausgebildete Anschlagfläche 17 gedrückt wird. In der Figur ist zwischen Bolzenkopf 14 und Anschlagfläche 17 zusätzliche eine Beilagscheibe 18 eingefügt, diese ist jedoch nicht zwingend erforderlich. Diese vorbeschriebene Ausbildung stellt sicher, dass der im Inneren des Stabelements 11 angeordnete Bolzenkopf 14 auch bei starker Zugbelastung, beispielsweise durch das Einschrauben des Gewindebolzens 12 in die Gewindebohrung 20, nicht aus dem Stabelement 11 bzw. dem Anschlagstück 15 herausgezogen wird. Der Bolzenkopf 14 hintergreift das Anschlagstück 15 an deren Anschlagfläche 17, gegebenenfalls über die Beilagscheibe 18.

In der Figur ist weiter dargestellt, dass der aus dem Anschlagstück 14 herausstehender Teil des Gewindebolzens 12 teilweise von einer Treibmuffe 21 umgeben ist. Im nicht montierten Zustand ist diese Treibmuffe 21 entlang der Achse A verschiebbar, jedoch drehfest zu dem Gewindebolzen 12 angeordnet. Hierzu ist ein quer zu dem Gewindebolzen 12 und durch ein entsprechendes Loch in diesem hindurchgehend ein Mitnehmerstift 23 vorgesehen, der mit seinen aus dem Gewindebolzen 12 herausragenden Enden in diametral einander gegenüberliegende, parallel zur Achse A orientierte Langlöcher 22 in der Treibmuffe 21 eingreift. Aufgrund dieser Langlöcher 22 ist die Treibmuffe 21 parallel zur Achse A gegenüber dem Gewindebolzen 12 verschiebbar. Alternative könnten auch Rundlöcher vorgesehen werden, gegebenenfalls mit gewissem Spiel zu dem Mitnehmerstift. Die Beweglichkeit der Treibmuffe gegenüber dem Gewindebolzen ist dann entsprechend eingeschränkt.

Die Treibmuffe 21 selbst weist eine sich über ihre gesamte Länge erstreckende Sechskantoberfläche auf; so dass die Treibmuffe 21 mittels eines Schraubschlüssels um die Achse A drehbar ist. Alternativ ist es auch möglich, dass die Treibmuffe 21 eine andere Zahl von Abflachungen für den Angriff eines Werkzeugs aufweist, beispielsweise zwei einander gegenüberliegende, parallele Abflachungen. Auch kann die Treibmuffe 21 zylinderförmig ausgebildet sein und damit eine im Querschnitt kreisförmige Oberfläche aufweisen. In diesem Fall erfolgt die Drehung um die Achse A mittels eines Spezialwerkzeugs, beispielsweise eines Hakens, der in entsprechende Ausnehmungen in der Oberfläche der Treibmuffe 21 eingreift, beispielsweise in die bereits erwähnten Langlöcher 22.

Durch die vorbeschriebene Drehbewegung der Treibmuffe 21 wird über den Mitnehmerstift 23 gleichzeitig der Gewindebolzen 12 gedreht und somit bei der Montage des Fachwerks mit seinem Gewinde 13 in die Gewindebohrung 20 des Knotenelements 10 eingeschraubt.

Im montierten Zustand, wie er in der Figur dargestellt ist, ist die Treibmuffe 21 zwischen dem Anschlagstück 15 des Stabelements 11 und der Abflachung 19 des Knotenelements 10 eingeklemmt, wobei in der Figur zwischen Abflachung 19 und Treibmuffe 21 noch eine Isolierscheibe 24 eingebracht ist.

Das Knotenelement 10 kann aus Aluminium oder aus Edelstahl bestehen, ebenso das Stabelement 11 mit seinem Anschlagstück 15. Bevorzugt ist das Knotenelement 10 aus Edelstahl und das Stabelement 11 einschließlich des Anschlagstücks 15 aus Aluminium gefertigt. Der Gewindebolzen 12 und der Mitnehmerstift 23 hingegen bestehen aus Edelstahl oder feuerverzinktem Stahl. Die Treibmuffe 21 kann zwar aus Edelstahl bestehen, bevorzugt ist jedoch hier Aluminium. Die fakultativ vorgesehene Beilagscheibe 18 kann wiederum aus Edelstahl, feuerverzinktem Stahl oder Aluminium bestehen, wobei Aluminium bevorzugt ist.

Knotenelement 10 und Stabelement 11 sind dauerhaft elektrisch miteinander verbunden. Diese elektrische Verbindung wird über den Gewindebolzen 12 hergestellt, eine Ausbildung der elektrischen Verbindung über die Treibmuffe 21 wird vermieden. Dementsprechend ist die zwischen Treibmuffe 21 und dem Knotenelement 10 angeordnete Isolierscheibe 24 eine elektrische Isolierscheibe, gebildet aus nicht leitfähigem Kunststoff. Auch die Treibmuffe 21 selbst ist zumindest teilweise, bevorzugt jedoch komplett mit einer nicht leitfähigen Beschichtung, beispielsweise einem Isolationslack, versehen. Der elektrische Kontakt zwischen Knotenelement 10 und Gewindebolzen 12 auf der einen und zwischen Gewindebolzen 12 und Stabelement 11 auf der anderen Seite muss jedoch gut und dauerhaft sein, das heißt eine Kontaktkorrosion muss vermieden werden. Hierzu ist der Gewindebolzen 12 zumindest an seinem Gewinde 13 und an der Unterseite seines Bolzenkopfes 14, bevorzugt jedoch insgesamt, mit einer kontaktkorrosionsbeständigen und leitfähigen Beschichtung 25, beispielsweise DACROMET 320®, versehen. Durch diese Beschichtung 25 sind die vorgenannten Kontakte gegen Kontaktkorrosion beständig, auch unter rauen Umgebungsbedingungen. Die gewünschte elektrische Verbindung zwischen Knotenelement 10 und Stabelement 11 ist somit dauerhaft gewährleistet.

Die in der Figur gezeigte, fakultative Beilagscheibe 18 ist ebenfalls mit einer, bevorzugt der gleichen kontaktkorrosionsbeständigen und leitfähigen Beschichtung 25 versehen, insbesondere wiederum mit DACROMET 320®. Dies gilt sowohl bei einer Ausbildung der Beilagscheibe 18 aus Aluminium als auch aus Edelstahl oder feuerverzinktem Stahl.

Auch der Mitnehmerstift 23 kann mit einer oder der korrosionsbeständigen und leitfähigen Beschichtung, insbesondere DACROMET 320®, versehen sein.

**Bezugszeichenliste**

| | |
|---|---|
| 10 | Knotenelement |
| 11 | Stabelement |
| 12 | Gewindebolzen |
| 13 | Gewinde |
| 14 | Bolzenkopf |
| 15 | Anschlagstück |
| 16 | Durchführung |
| 17 | Anschlagfläche |
| 18 | Beilagscheibe |
| 19 | Abflachung |
| 20 | Gewindebohrung |
| 21 | Treibmuffe |
| 22 | Langloch |
| 23 | Mitnehmerstift |
| 24 | Isolierscheibe |
| 25 | Beschichtung |
| | |
| A | Längsachse |

## Patentansprüche

1. Vorrichtung umfassend ein Stabelement, ein Knotenelement und eine Verbindungsvorrichtung zwischen dem Stabelement (11) und dem Knotenelement (10),
a) wobei das Stabelement (11) und/oder das Knotenelement (10) zumindest im Wesentlichen aus Aluminium besteht,
b) wobei das Knotenelement (10) eine oder mehrere Gewindebohrungen (20) aufweist,
c) wobei die Verbindungsvorrichtung mindestens einen Gewindebolzen (12) umfasst, dessen Bolzenkopf (14) im Stabelement (11) angeordnet ist und dessen Gewinde (13) mit der Gewindebohrung (20) im Knotenelement (10) zusammenwirkt,
d) wobei der Gewindebolzen (12) zumindest im Wesentlichen aus Stahl besteht,
**dadurch gekennzeichnet, dass**
e) der Gewindebolzen (12) teilweise oder vollständig mit einer kontaktkorrosionsbeständigen und dauerhaft elektrisch leitfähigen Beschichrung (25) versehen ist.

2. Vorrichtung nach Anspruch 1,
**dadurch gekennzeichnet, dass**
die Beschichtung (25) ein Lack mit leitfähigem Zusatz, insbesondere mit einem kohlenstoffhaltigen Zusatz oder mit Kohlenstoff als Zusatz, ist.

3. Vorrichtung nach Anspruch 1 oder 2,
**dadurch gekennzeichnet, dass**
die Beschichtung (25) Zink und/oder Aluminium, insbesondere Zink- und/oder Aluminiumlamellen, vorzugsweise in einer Chromoxydmatrize, enthält.

4. Vorrichtung nach einem der vorhergehenden Ansprüche,
**dadurch gekennzeichnet, dass**
die Schichtdicke der Beschichtung (25) zwischen 1 µm und 20 µm liegt, insbesondere zwischen 5 µm und 15 µm, vorzugsweise bei etwa 10 µm.

5. Vorrichtung nach einem der vorhergehenden Ansprüche,
**dadurch gekennzeichnet, dass**
zwischen Bolzenkopf (14) und Stabelement (11) eine Beilagscheibe (18) angeordnet ist, die zumindest im Wesentlichen aus Metall, insbesondere Aluminium oder Stahl, vorzugsweise Edelstahl oder feuerverzinktem Stahl oder galvanisch verzinktem Stahl oder rostfreiem Stahl, und/oder aus Faserverbundwerkstoff, insbesondere aus leitfähigem Faserverbundwerkstoff, vorzugsweise aus kohlenstofffaserverstärktem Kunststoff und/odex aus glasfaservetstätktem Kunststoff besteht und die ebenfalls mit der oder mit einer kontaktkorrosionsbeständigen und leitfähigen Beschichtung (25) versehen ist.

6. Vorrichtung nach einem der vorhergehenden Ansprüche,
**dadurch gekennzeichnet, dass**
der Gewindebolzen (12) zumindest teilweise von einer vorzugsweise im Wesentlichen aus Metall, insbesondere Aluminium, oder Faserverbundwerkstoff bestehenden Treibmuffe (21) umgeben ist, die über einen Mitnehmerstift (23) drehfest, vorzugsweise jedoch axial verschiebbar, mit dem Gewindebolzen (12) verbunden ist,
wobei der vorzugsweise zumindest im Wesentlichen aus Metall, insbesondere Stahl, vorzugsweise Edelstahl oder feuerverzinktem Stahl oder galvanisch verzinktem Stahl oder rostfreiem Stahl, und/oder aus Faserverbundwetkstoff, inbesondere aus leitfähigem Fasetverbundwerkstoff, vorzugweise aus kohlenstofffaserverstärktem Kunststoff und/oder aus glasfaserverstärktem Kunststoff bestehende Mitnehmerstift (23) ebenfalls mit det oder mit einer kontaktkorrosionsbeständigen und leitfähigen Beschichtung (25) versehen ist.

7. Vorrichtung nach Anspruch 6,
**dadurch gekennzeichnet, dass**
die Treibmuffe (21) teilweise oder vollständig mit einer nicht leitfähigen Beschichtung versehen ist,

8. Vorrichtung nach Anspruch 6 oder 7,
**dadurch gekennzeichnet, dass**
zwischen Treibmuffe (21) und Knotenelement (10) eine Isolationsscheibe (24), insbesondere aus nicht leitfähigem Kunststoff und/oder Harrgewebe und/oder Glashartgewebe und/oder Textilien und/oder Plexiglas, angeordnet ist.

9. Vorrichtung nach einem der vorhergehenden Ansprüche,
**dadurch gekennzeichnet, dass**
Knotenelement (10) und Stabelement (11) Bestandteil einer Tragkonstruktion sind, insbesondere eines Fachwerks, vorzugsweise eines Raumfachwerks.

10. Fachwerk, insbesondere Raumfachwerk, umfassend Knotenelemente (10) und Stabelemente (11),
**dadurch gekennzeichnet, dass**
zwischen den Stabelenlenten (11) und den Knotenelementen (10) Vexbindungsvorrichtungen vorgesehen sind derart, dass die Stabelemente (11), die Knotenelemente (10) und die Verbindungsvorrichrungen Vorrichtungen nach einem der vorhergehenden Ansprüche ausbilden.

11. Fachwerk nach Anspruch 10,
**dadurch gekennzeichnet, dass**
Stabelemente (11) und/oder Knotenelemente (10) und/oder Verbindungsvorrichtungen im montierten Zustand mit einer Korrosionsschutz-Lackierung versehen sind.

## Claims

1. Assembly comprising a bar element, a node element and a connection device between the bar element (11) and the node element (10),
a) wherein the bar element (11) and/or the node element (10) consist at least substantially of aluminium,
b) wherein the node element (10) has one or more threaded bores (20),
c) wherein the connection device comprises at least one threaded bolt (12), the bolt head (14) of which is arranged in the bar element (11) and the thread (13) of which cooperates with the threaded bore (20) in the node element (10),
d) wherein the threaded bolt (12) consists at least substantially of steel, **characterised in that**
e) the threaded bolt (12) is provided partially or completely with a contact- corrosion-resistant and permanently electrically conductive coating (25).

2. Assembly according to claim 1, **characterised in that** the coating (25) is a lacquer with conductive additive, in particular with a carbon-containing additive or with carbon as the additive.

3. Assembly according to claim 1 or 2, **characterised in that** the coating (25) contains zinc and/or aluminium, in particular zinc and/or aluminium leaves, preferably in a chromoxide matrix.

4. Assembly according to any of the preceding claims, **characterised in that** the layer thickness of the coating (25) is between 1 µm and 20 µm, in particular between 5 µm and 15 µm, preferably around 10 µm.

5. Assembly according to any of the preceding claims, **characterised in that** between the bolt head (14) and the bar element (1) is arranged a shim (18) which consists at least substantially of metal, in particular aluminium or steel, preferably special steel or hot-galvanized steel or galvanically zinc-plated steel or stainless steel, and/or of fibre-composite material, in particular conductive fibre-composite material, preferably carbon-fibre-reinforced plastic and/or glass-fibre-reinforced plastic, and which is also provided with the or a contact-corrosion-resistant and conductive coating (25).

6. Assembly according to any of the preceding claims, **characterised in that** the threaded bolt (12) is surrounded at least partially by a drive sleeve (21) consisting preferably substantially of metal, in particular aluminium, or fibre-composite material, which is connected with the threaded bolt (12) rotationally fixed but preferably axially mobile via a carrier pin (23), wherein the carrier pin (23) which preferably consists at least substantially of metal, in particular steel, preferably special steel or hot-galvanized steel or galvanically zinc-plated steel or stainless steel, and/or of fibre-composite material, in particular conductive fibre-composite material, preferably carbon-fibre-reinforced plastic and/or glass-fibre-reinforced plastic, is also provided with the or a contact-corrosion-resistant and conductive coating (25).

7. Assembly according to claim 6, **characterised in that** the drive sleeve (21) is provided partially or completely with a non-conductive coating.

8. Assembly according to claim 6 or 7, **characterised in that** between the drive sleeve (21) and the node element (10) is arranged an insulating disc (24), in particular of a non-conductive plastic and/or bonded fabric and/or glass bonded fabric and/or textiles and/or Plexiglass.

9. Assembly according to any of the preceding claims, **characterised in that** the node element (10) and bar element (11) are part of a supporting structure, in particular a framework, preferably a three-dimensional framework.

10. Framework, in particular three-dimensional framework, comprising node elements (10) and bar elements (11), **characterised in that** between the bar elements (11) and the node elements (10) are provided connection devices such that the bar elements (11), node elements (10) and connection devices form assemblies according to any of the preceding claims.

11. Framework according to claim 10, **characterised in that** bar elements (11) and/or node elements (10) and/or connection devices are provided with a corrosion-protection lacquer in the installed state.

## Revendications

1. Dispositif comprenant une barre de treillis, un élément de noeud et un dispositif de liaison entre la barre de treillis (11) et l'élément de noeud (10),
a) la barre de treillis (11) et l'élément de noeud (10) étant au moins essentiellement en aluminium,
b) l'élément de noeud (10) comportant un ou plusieurs taraudages (20),
c) le dispositif de liaison comportant au moins un boulon (12) dont la tête de boulon (14) est disposé dans la barre de treillis (11) et dont le filetage (13) coopère avec le taraudage (20) dans l'élément de noeud (10,
d) le boulon (12) étant au moins essentiellement en acier,
**caractérisé en ce que**
e) le boulon (12) est pourvu partiellement ou entièrement d'un revêtement (25) résistant à la corrosion de contact et étant de manière permanente électriquement conducteur.

2. Dispositif selon la revendication 1, **caractérisé en ce que** le revêtement (25) est un vernis avec un additif conducteur, plus particulièrement avec un additif contenant du carbone ou avec du carbone comme additif.

3. Dispositif selon la revendication 1 ou 2, **caractérisé en ce que** le revêtement (25) comprend du zinc et/ou de l'aluminium, plus particulièrement des lamelles en zinc et/ou en aluminium, plus particulièrement dans une matrice d'oxyde de chrome.

4. Dispositif selon l'une des revendications précédentes, **caractérisé en ce que** l'épaisseur du revêtement (25) est comprise entre 1 µm et 20 µm, particulièrement entre 5 µm et 15 µm et plus particulièrement à environ 10 µm.

5. Dispositif selon l'une des revendications précédentes, **caractérisé en ce qu'**une rondelle (18) est disposée entre la tête de boulon (14) et la barre de treillis (11), qui est au moins essentiellement en métal, particulièrement en aluminium ou en acier, plus particulièrement en acier spécial ou en acier zingué à chaud ou en acier zingué galvaniquement ou en acier inoxydable, et/ou en un matériau de fibres composites, plus particulièrement en un matériau composite électriquement conducteur, de préférence en une matière plastique renforcée de fibres de carbone et/ou en matière plastique renforcée de fibres de verre et qui est également pourvue d'un ou du revêtement (25) résistant à la corrosion de contact et électriquement conducteur.

6. Dispositif selon l'une des revendications précédentes, **caractérisé en ce que** le boulon (12) est revêtu au moins partiellement d'un manchon (21) réalisé de préférence essentiellement en métal, plus particulièrement en aluminium ou en un matériau composite à fibres, qui est solidaire en rotation moyennant une broche d'entraînement (23), la broche d'entraînement réalisée de préférence au moins essentiellement en métal, plus particulièrement en acier, de préférence en acier spécial ou en acier zingué à chaud ou zingué galvaniquement ou en acier inoxydable et/ou en un matériau composite à fibres, plus particulièrement en un matériau composite à fibres électriquement conducteur, de préférence en une matière plastique renforcée à fibres de carbone est également revêtu avec le ou un revêtement (25) électriquement conducteur et résistant à la corrosion de contact.

7. Dispositif selon la revendication 6, **caractérisé en ce que** le manchon (21) est partiellement ou entièrement revêtu d'une matière électriquement non conductrice.

8. Dispositif selon la revendication 6 ou 7, **caractérisé en ce qu'**un disque d'isolation (24) est disposé entre le manchon (21) et l'élément de noeud (10), réalisé plus particulièrement en une matière plastique électriquement non conductrice et/ou en un tissu dur et/ou en un tissu dur en verre et/ou en matière textile et/ou en plexiglass.

9. Dispositif selon l'une des revendications précédentes, **caractérisé en ce que** l'élément de noeud (10) et la barre en treillis (11) font partis d'une construction porteuse, plus particulièrement d'une construction en treillis, de préférence d'une construction tridimensionnelle en treillis.

10. Construction en treillis, plus particulièrement en construction tridimensionnelle en treillis avec des éléments noeud (10) et des barres en treillis (11), **caractérisée en ce que** des dispositifs de liaison sont prévus entre les barres en treillis (11) et les éléments noeud (10) de façon que les barres en treillis (11), les éléments noeud (10) et les dispositifs de liaison forment des dispositifs selon l'une des revendications précédentes.

11. Construction en treillis selon la revendication 10, **caractérisée en ce que** des barres en treillis (11) et/ou des éléments noeud (10) et/ou des dispositifs de liaison sont pourvus en état monté avec un vernis de protection de corrosion.
